# EUROPEAN PATENT SPECIFICATION

(11) **EP 3 060 020 B1**
(45) Date of publication and mention of the grant of the patent: **12.12.2018**
(21) Application number: 14854321.8
(22) Date of filing: 17.10.2014
(51) Int. Cl.: H04W 72/04, H04W 74/02, H04W 84/04

(54) **HETEROGENEOUS NETWORK COMMUNICATION METHOD AND RELEVANT EQUIPMENT**
HETEROGENES NETZWERKKOMMUNIKATIONSVERFAHREN UND ENTSPRECHENDE VORRICHTUNG
PROCÉDÉ DE COMMUNICATION DANS DES RÉSEAUX HÉTÉROGÈNES ET DISPOSITIF CORRESPONDANT

(30) Priority: 18.10.2013 CN 201310491795
(43) Date of publication of application: 24.08.2016
(73) Proprietor: China Mobile Communications Corporation, Beijing 100032 (CN)
(72) Inventor: PAN, Chengkang, Beijing 100032 (CN); PAN, Zhengang, Beijing 100032 (CN); I, Chihlin, Beijing 100032 (CN)
(74) Representative: Novaimo
(86) International application number: PCT/CN2014/088831
(87) International publication number: WO 2015/055140

(56) References cited:
- WO-A1-2011/102771
- CN-A- 101 296 489
- CN-A- 101 345 544
- CN-A- 102 246 446
- CN-A- 102 348 244
- US-A1- 2013 156 120
- MOTOROLA: "Frame/Symbol offset for FDD/TDD with Lightly Scheduled subframes", 3GPP DRAFT; R1-104716_FRAME_SYMBOL OFFSET FOR FDD & TDD -2-, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 20 August 2010 (2010-08-20), XP050450219, [retrieved on 2010-08-20]
- "3rd Generation Partnership Project; Technical Specification Group Radio Access Network; Evolved Universal Terrestrial Radio Access (E-UTRA); Physical channels and modulation (Release 11)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.4.0, 20 September 2013 (2013-09-20), pages 1-120, XP050712717, [retrieved on 2013-09-20]
- NEW POSTCOM: "Evaluation assumptions for enhancement for UE-specific", 3GPP DRAFT; R1-130186 SMALL CELL DMRS REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 18 January 2013 (2013-01-18), XP050663353, Retrieved from the Internet: URL:http://www.3gpp.org/ftp/tsg_ran/WG1_RL 1/TSGR1_72/Docs/ [retrieved on 2013-01-18]

## Description

### TECHNICAL FIELD

The present disclosure relates to the field of communication technology, in particular to a heterogeneous network communication method and relevant equipment.

### BACKGROUND

In order to meet the increasing demand on service amount and service density, currently the international standardization organizations such as 3^{rd} Generation Partnership Project (3GPP) have proposed the introduction of new wireless nodes into a wireless network, i.e., microcell base stations (hereinafter referred to as micro base stations for short). The micro base station has a coverage range different from a macrocell base station (hereinafter referred to as macro base station for short), so the wireless network into which the micro base stations are introduced is usually called as a heterogeneous network.

In the heterogeneous network, the macro base station is operated at a low frequency band and covers a large region, so as to provide a mobile terminal with data transmission at medium and low speeds and enable the mobile terminal to access services with medium and high mobility. The micro base station is operated at a high frequency band (also at a low frequency band) and covers a small hotspot region indoor or outdoor, so as to provide the mobile terminal with data transmission at a high speed and enable the mobile terminal to access services with low mobility.

In the related art, an identical air-interface standard and an identical frame structure are adopted by both the macro base station and the micro base station, and frame synchronization is maintained therebetween. After the mobile terminal accesses a cellular communication system via the macro base station, information is transmitted between the mobile terminal and the macro base station on the basis of subframes. After the mobile terminal accesses the cellular communication system via the micro base station, information is also transmitted between the mobile terminal and the micro base station on the basis of subframes. In this way, it is able to simplify the design of the mobile terminal and facilitate the mobile terminal to switch between the macro base station and the micro base station.

However, depending on channel and service characteristics of microcells, usually burst data is transmitted between the micro base station and the mobile terminal, and each time merely a small volume of data is transmitted, so it is unnecessary to occupy a long timeslot. When the air-interface standard for the macro base station is directly applied to the micro base station, the efficiency of the data transmission between the micro base station and the mobile terminal as well as the throughput of the micro base station will be remarkably reduced, and thereby a relatively high data transmission delay will occur for the micro base station. The 3GPP technical document titled "Frame/Symbol offset for FDD/TDD with Lightly Scheduled subframes", R1-104716, discloses that the transmission of PDCCH/PCFICH/PHICH from a femto BS in a LTE-based HetNet to a UE takes place in lightly-scheduled subframes (i.e MBSFN subframes). In particular, lightly-scheduled subframes are different from Almost Blank Subframes, which do not carry any PDCCH/PCFICH/PHICH. Additionally, D1 discloses that the femto BS uses frame and symbol offsets with multiple MBSFN frames to avoid any interference with the CRS/PDCCH/PHICH/PCFICH/SCH/PBCH of the macro BS.

### SUMMARY

The invention is set out in the appended set of claims. The embodiments and/or examples of the following description which are not covered by the appended claims are considered as not being part of the present invention. The present disclosure provides a heterogeneous network communication method and relevant equipment, which can solve problems in the related art of low data transmission efficiency between the micro base station and the mobile terminal, low throughput of the micro base station, and long data transmission delay for the micro base station.

The technical solutions of the present disclosure are as follows.

The present disclosure provides in some embodiments a heterogeneous network communication method, including steps of: enabling a mobile terminal to access a cellular communication system via a micro base station; when data signaling is to be transmitted between the mobile terminal and the micro base station, determining, by the mobile terminal, symbols to be occupied by the to-be-transmitted data signaling from symbols included in a microcell subframe; and transmitting the data signaling between the mobile terminal and the micro base station on the basis of the determined symbols.

According to the heterogeneous network communication method in the embodiments of the present disclosure, with respect to the burst data transmitted between the micro base station and the mobile terminal and at a small data volume each time, after the mobile terminal in the embodiments of the present disclosure accesses the cellular communication system via the micro base station, the data signaling is transmitted between the mobile terminal and the micro base station on the basis of the symbols rather than the subframes. The mobile terminal determines the symbols to be occupied by the data signaling from the symbols included in the microcell subframe, and then the data signaling is transmitted between the mobile terminal and the micro base station on the basis of the determined symbols. As a result, it is able to effectively improve the efficiency of the data transmission between the micro base station and the mobile terminal as well as the throughput of the micro base station, thereby to reduce the data transmission delay for the micro base station.

Optionally, the number of the symbols included in the microcell subframe is greater than the number of the symbols included in a macrocell subframe, so as to further improve the efficiency of the data transmission between the micro base station and the mobile terminal as well as the throughput of the micro base station.

Optionally, the macrocell subframe includes M symbols, a macrocell frame includes N macrocell subframes, a macrocell superframe includes L macrocell frames. The microcell subframe includes K symbols, a microcell frame includes N microcell subframes, a microcell superframe includes L microcell frames, and K is greater than M.

Optionally, frame synchronization is maintained between the microcell subframe and the macrocell subframe, so as to switch the data transmission between a macrocell and a microcell rapidly and smoothly.

Optionally, the step of determining, by the mobile terminal, the symbols to be occupied by the to-be-transmitted data signaling from the symbols included in the microcell subframe includes: when the mobile terminal is currently in a preconfigured contention access period, determining, by the mobile terminal, the symbols to be occupied by the to-be-transmitted data signaling from the symbols included in the microcell subframe in a contention access mode; and when the mobile terminal is currently in a preconfigured contention-free access period, determining, by the mobile terminal, the symbols to be occupied by the to-be-transmitted data signaling from the symbols included in the microcell subframe in a contention-free access mode. The data signaling is transmitted in the contention access period between the micro base station and the mobile terminal in the contention access mode and transmitted in the contention-free access period between the micro base station and the mobile terminal in the contention-free access mode, and as a result, it is able to transmit the data signaling in a flexible manner.

Optionally, several subframes of the microcell frame or several symbols of the microcell subframe are occupied by each contention access period.

Optionally, the heterogeneous network communication method further includes receiving high-layer signaling for the micro base station from a macro base station to which the micro base station belongs. In this way, a data plane and a control plane of the mobile terminal are separated from each other. The control plane is mainly controlled by the macro cell and includes access management and mobility management, and the microcell mainly takes charge of the data communication at the data plane. As a result, it is able to reduce a large number of processing resources for the micro base station, ensure the user experience, and facilitate the management and control of the mobile terminal.

The present disclosure provides in some embodiments a mobile terminal, including an access unit configured to access a cellular communication system via a micro base station, a symbol determination unit configured to, when data signaling is to be transmitted between the mobile terminal and the micro base station, determine symbols to be occupied by the to-be-transmitted data signaling from symbols included in a microcell subframe, and a data signaling transmission unit configured to transmit the data signaling between the mobile terminal and the micro base station on the basis of the determined symbols.

According to the mobile terminal in the embodiments of the present disclosure, with respect to the burst data transmitted between the micro base station and the mobile terminal and at a small data volume each time, after the mobile terminal in the embodiments of the present disclosure accesses the cellular communication system via the micro base station, the data signaling is transmitted between the mobile terminal and the micro base station on the basis of the symbols rather than the subframes. The mobile terminal determines the symbols to be occupied by the data signaling from the symbols included in the microcell subframe, and then the data signaling is transmitted between the mobile terminal and the micro base station on the basis of the determined symbols. As a result, it is able to effectively improve the efficiency of the data transmission between the micro base station and the mobile terminal as well as the throughput of the micro base station, thereby to reduce the data transmission delay for the micro base station.

Optionally, the symbol determination unit is configured to, when the mobile terminal is currently in a preconfigured contention access period, determine the symbols to be occupied by the to-be-transmitted data signaling from the symbols included in the microcell subframe in a contention access mode, and when the mobile terminal is currently in a preconfigured contention-free access period, determine the symbols to be occupied by the to-be-transmitted data signaling from the symbols included in the microcell subframe in a contention-free access mode. The data signaling is transmitted in the contention access period between the micro base station and the mobile terminal in the contention access mode and transmitted in the contention-free access period between the micro base station and the mobile terminal in the contention-free access mode, and as a result, it is able to transmit the data signaling in a flexible manner.

Optionally, the mobile terminal further includes a high-layer signaling reception unit configured to high-layer signaling for the micro base station from a macro base station to which the micro base station belongs. In this way, a data plane and a control plane of the mobile terminal are separated from each other. The control plane is mainly controlled by the macro cell and includes access management and mobility management, and the microcell mainly takes charge of the data communication at the data plane. As a result, it is able to reduce a large number of processing resources for the micro base station, ensure the user experience, and facilitate the management and control of the mobile terminal.

The present disclosure provides in some embodiments a heterogeneous network communication method, including steps of: enabling, by a micro base station, a mobile terminal to access a cellular communication system; when data signaling is to be transmitted between the micro base station and the mobile terminal, determining, by the micro base station, symbols to be occupied by the to-be-transmitted data signaling from symbols included in a microcell subframe; and transmitting the data signaling between the micro base station and the mobile terminal on the basis of the determined symbols.

According to the heterogeneous network communication method in the embodiments of the present disclosure, with respect to the burst data transmitted between the micro base station and the mobile terminal and at a small data volume each time, after the mobile terminal in the embodiments of the present disclosure accesses the cellular communication system via the micro base station, the data signaling is transmitted between the mobile terminal and the micro base station on the basis of the symbols rather than the subframes. The micro base station determines the symbols to be occupied by the data signaling from the symbols included in the microcell subframe, and then the data signaling is transmitted between the mobile terminal and the micro base station on the basis of the determined symbols. As a result, it is able to effectively improve the efficiency of the data transmission between the micro base station and the mobile terminal as well as the throughput of the micro base station, thereby to reduce the data transmission delay for the micro base station.

Optionally, the number of the symbols included in the microcell subframe is greater than the number of the symbols included in a macrocell subframe, so as to further improve the efficiency of the data transmission between the micro base station and the mobile terminal as well as the throughput of the micro base station.

Optionally, the macrocell subframe includes M symbols, a macrocell frame includes N macrocell subframes, a macrocell superframe includes L macrocell frames; the microcell subframe includes K symbols, a microcell frame includes N microcell subframes, a microcell superframe includes L microcell frames, and K is greater than M.

Optionally, frame synchronization is maintained between the microcell subframe and the macrocell subframe, so as to switch the data transmission between a macrocell and a microcell rapidly and smoothly.

Optionally, the step of determining, by the micro base station, the symbols to be occupied by the to-be-transmitted data signaling from the symbols included in the microcell subframe includes: when the micro base station is currently in a preconfigured contention access period, determining, by the micro base station, the symbols to be occupied by the to-be-transmitted data signaling from the symbols included in the microcell subframe in a contention access mode; and when the micro base station is currently in a preconfigured contention-free access period, determining, by the micro base station, the symbols to be occupied by the to-be-transmitted data signaling from the symbols included in the microcell subframe in a contention-free access mode. The data signaling is transmitted in the contention access period between the micro base station and the mobile terminal in the contention access mode and transmitted in the contention-free access period between the micro base station and the mobile terminal in the contention-free access mode, and as a result, it is able to transmit the data signaling in a flexible manner.

Optionally, several subframes of the microcell frame or several symbols of the microcell subframe are occupied by each contention access period.

The present disclosure provides in some embodiments a micro base station, including an access unit configured to enable a mobile terminal to access a cellular communication system, a symbol determination unit configured to, when data signaling is to be transmitted between the micro base station and the mobile terminal, determine symbols to be occupied by the to-be-transmitted data signaling from symbols included in a microcell subframe, and a data signaling transmission unit configured to transmit the data signaling between the micro base station and the mobile terminal on the basis of the determined symbols.

According to the micro base station in the embodiments of the present disclosure, with respect to the burst data transmitted between the micro base station and the mobile terminal and at a small data volume each time, after the mobile terminal in the embodiments of the present disclosure accesses the cellular communication system via the micro base station, the data signaling is transmitted between the mobile terminal and the micro base station on the basis of the symbols rather than the subframes. The micro base station determines the symbols to be occupied by the data signaling from the symbols included in the microcell subframe, and then the data signaling is transmitted between the mobile terminal and the micro base station on the basis of the determined symbols. As a result, it is able to effectively improve the efficiency of the data transmission between the micro base station and the mobile terminal as well as the throughput of the micro base station, thereby to reduce the data transmission delay for the micro base station.

Optionally, the symbol determination unit is configured to, when the micro base station is currently in a preconfigured contention access period, determine the symbolss to be occupied by the to-be-transmitted data signaling from the symbols included in the microcell subframe in a contention access mode; and when the micro base station is currently in a preconfigured contention-free access period, determine the symbols to be occupied by the to-be-transmitted data signaling from the symbols included in the microcell subframe in a contention-free access mode. The data signaling is transmitted in the contention access period between the micro base station and the mobile terminal in the contention access mode and transmitted in the contention-free access period between the micro base station and the mobile terminal in the contention-free access mode, and as a result, it is able to transmit the data signaling in a flexible manner.

### BRIEF DESCRIPTION OF THE DRAWINGS

Fig.1 is a flow chart of a heterogeneous network communication method at a mobile terminal side according to a first embodiment of the present disclosure;
Fig.2 is a schematic view showing a frame structure of a macrocell according to the first embodiment of the present disclosure;
Fig.3 is a schematic view showing a frame structure of a microcell according to the first embodiment of the present disclosure;
Fig.4 is a schematic view showing the configuration of a contention access period and a contention-free access period according to the first embodiment of the present disclosure;
Fig.5 is another schematic view showing the configuration of the contention access period and the contention-free access period according to the first embodiment of the present disclosure;
Fig.6 is a schematic view showing a mobile terminal according to a second embodiment of the present disclosure,
Fig.7 is a flow chart of a heterogeneous network communication method at a micro base station side according to a third embodiment of the present disclosure; and
Fig.8 is a schematic view showing a micro base station according to a fourth embodiment of the present disclosure.

### DETAILED DESCRIPTION OF THE EMBODIMENTS

Usually, burst data is transmitted between a micro base station and a mobile terminal, and each time merely a small volume of data is transmitted, so it is unnecessary to occupy a long timeslot. When an air-interface standard for a macro base station is directly applied to the micro base station, the efficiency of the data transmission between the micro base station and the mobile terminal as well as the throughput of the micro base station will be remarkably reduced, and thereby a relatively high data transmission delay will occur for the micro base station. In order to overcome these drawbacks, after a mobile terminal in the embodiments of the present disclosure accesses a cellular communication system via a micro base station, data signaling is transmitted between the mobile terminal and the micro base station on the basis of symbols rather than subframes. The mobile terminal determines the symbols to be occupied by the data signaling from symbols included in the subframe, and then the data signaling is transmitted between the mobile terminal and the micro base station on the basis of the determined symbols. As a result, it is able to effectively improve the efficiency of the data transmission between the micro base station and the mobile terminal as well as the throughput of the micro base station, thereby to reduce the data transmission delay for the micro base station.

The present disclosure will be described hereinafter in conjunction with the drawings and embodiments.

### First Embodiment

After a mobile terminal accesses a cellular communication system via a micro base station, information is transmitted between the mobile terminal and the micro base station in accordance with a frame structure of a microcell. To be specific, the mobile terminal may transmit data signaling to the micro base station in accordance with the frame structure of the microcell, and receive data signaling transmitted by the micro base station in accordance with the frame structure. A procedure of transmitting the data signaling from the mobile terminal to the micro base station and a procedure of receiving by the mobile terminal the data signaling from the micro base station will be described in this embodiment.

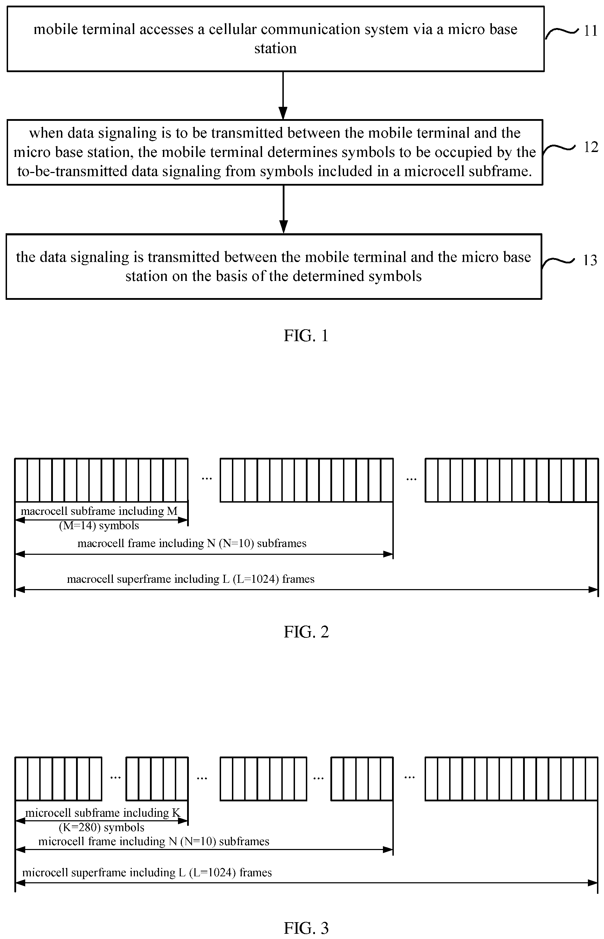

As shown in Fig.1, the present disclosure provides in this embodiment a heterogeneous network communication method at a mobile terminal side, which includes the following steps.

At step 11, a mobile terminal accesses a cellular communication system via a micro base station.

To be specific, the mobile terminal may initially access the cellular communication system via a macro base station by default, and under some special conditions (e.g., when a fault or service saturation occurs for the macro base station), the mobile terminal may access the cellular communication system via the micro base station.

After the mobile terminal accesses the cellular communication system via the macro base station, information is transmitted between the mobile terminal and the macro base station in accordance with a frame structure of a macrocell. Fig.2 shows the frame structure of the macrocell. A subframe of the macrocell (hereinafter referred to as macrocell subframe) includes M symbols, and each symbol represents a duration desired for transmitting an Orthogonal Frequency Division Multiplexing (OFDM) symbol. A frame of the macrocell (hereinafter referred to as macrocell frame) includes N macrocell subframes, and a superframe of the macrocell (hereinafter referred to as macrocell superframe) includes L macrocell frames. M may be 14, N may be 10, and L may be 1024. In other words, each macrocell subframe includes 14 symbols, each macrocell frame includes 10 macrocell subframes, and each macrocell superframe includes 1024 macrocell frames.

The information is transmitted between the mobile terminal and the macro base station on the basis of subframes. To be specific, when the information is to be transmitted from the mobile terminal to the macro base station, the mobile terminal may determine macrocell subframes to be occupied by the to-be-transmitted information, and then transmit the to-be-transmitted information to the macro base station on the basis of the determined macrocell subframes. The to-be-transmitted information may occupy all, or a part of, the symbols included in the macrocell subframe. When the information is to be received by the mobile terminal from the macro base station, the mobile terminal may determine macrocell subframes to be occupied by the information to be received, and then receive the information from the macro base station on the basis of the determined macrocell subframes. The received information may occupy all, or a part of, the symbols included in the macrocell subframe.

After the mobile terminal accesses the cellular communication system via the macro base station, a switch program may be enabled by the macro base station when the mobile terminal enters a coverage range of a certain micro base station, so as to switch the macro base station to the micro base station and enable the mobile terminal to access the cellular communication system via the micro base station. A procedure for switching the macro base station to the micro base station is known in the art, and thus will not be particularly defined herein.

At step 12, when data signaling is to be transmitted between the mobile terminal and the micro base station, the mobile terminal determines symbols to be occupied by the to-be-transmitted data signaling from symbols included in a microcell subframe.

In the related art, the macrocell and the microcell are independent of each other, and after the mobile terminal accesses the cellular communication system via the micro base station, both data-related signaling and data-independent signaling are transmitted by the micro base station to the mobile terminal. As a result, a large number of processing resources of the micro base station may be consumed, and it is difficult to ensure the user experience. For example, in order to achieve the switch control, each micro base station needs to periodically broadcast information about its own neighboring cells, and during the cell switch, the mobile terminal needs to receive the information broadcast by a plurality of micro base stations so as to determine a target cell. In this way, a normal service may be interrupted, a large number of processing resources of the micro base station may be consumed, and the management and control of the mobile terminal may be adversely affected.

In this embodiment of the present disclosure, after the mobile terminal accesses the cellular communication system via the micro base station, a data plane and a control plane of the mobile terminal may be separated from each other. The control plane is mainly controlled by the macro cell and includes access management and mobility management, and the microcell mainly takes charge of the data communication at the data plane. As a result, it is able to reduce a large number of processing resources for the micro base station, ensure the user experience, and facilitate the management and control of the mobile terminal.

The signaling transmitted between the mobile terminal and the micro base station may include data signaling and high-layer signaling. The data signaling refers to data-related signaling, and mainly includes data, information about a modulation mode of the data, information about a length of the data and transmission resource indication information. The high-layer signaling refers to data-independent signaling, and mainly includes system information and switching instruction. In the first embodiment of the present disclosure, merely the data signaling is to be transmitted between the mobile terminal and the micro base station, and the high-layer signaling for the micro base station is transmitted by a macro base station to which the micro base station belongs to the mobile terminal.

For example, when the cell switch procedure is to be performed by the mobile terminal, relevant switch parameters of a target cell (e.g., a signal-to-noise ratio, signal strength and a service saturation state of the target cell) may be transmitted by the macro base station to the mobile terminal. However, under some special conditions (e.g., when a fault or service saturation occurs for the macro base station), these parameters may also be transmitted by the micro base station to the mobile terminal.

At step 13, the data signaling is transmitted between the mobile terminal and the micro base station on the basis of the determined symbols.

In the related art, after the mobile terminal accesses the cellular communication system via the micro base station, the information is to be transmitted between the micro base station and the mobile terminal on the basis of subframes. Usually, the burst data is transmitted between the micro base station and the mobile terminal, and each time a small volume of data is transmitted, so it is unnecessary to occupy a long timeslot. When the information is transmitted on the basis of subframes, a few of the symbols included in the microcell subframe may be used to transmit the information each time. As a result, the efficiency of the data transmission between the micro base station and the mobile terminal as well as the throughput of the micro base station will be remarkably reduced, and thereby the high data transmission delay will occur for the micro base station. However, in the first embodiment of the present disclosure, the data signaling may be transmitted between the mobile terminal and the micro base station on the basis of symbols. In this way, it is able to prevent the occurrence of such a condition where merely a part of the symbols included in the microcell subframe are occupied by the to-be-transmitted data signaling, thereby to improve the efficiency of the data transmission between the micro base station and the mobile terminal as well as the throughput of the micro base station, and reduce the data transmission delay for the micro base station.

The transmission of the data signaling between the mobile terminal and the micro base station includes the transmission of the data signal from the mobile terminal to the micro base station and the transmission of the data signal from the micro base station to the mobile terminal. When the data signaling is transmitted from the mobile terminal to the micro base station, the mobile terminal may determine the symbols to be occupied by the to-be-transmitted data signaling from the symbols included in the microcell subframe, and then transmit the data signaling to the micro base station on the basis of the determined symbols. When the data signaling is transmitted from the micro base station to the mobile terminal, the mobile terminal may determine the symbols to be occupied by the to-be-transmitted data signaling from the symbols included in the microcell subframe, and then receive the data signaling from the micro base station on the basis of the determined symbols.

When the mobile terminal determines the symbols to be occupied by the to-be-transmitted data signaling, the number of the symbols to be occupied may be determined in accordance with a duration desired for transmitting the data signaling between the mobile terminal and the micro base station and a length of each symbol in the frame structure of the microcell. Then, the mobile terminal may determine the symbols desired for the transmission of the data signaling from the symbols included in the microcell subframe in accordance with the number of the symbols to be occupied.

A frame structure of the microcell may be identical to that of the macrocell. As shown in Fig.2, a subframe of the microcell (hereinafter referred to as microcell subframe) includes M symbols, a frame of the microcell (hereinafter referred to microcell frame) includes N microcell subframes, and a superframe of the microcell (hereinafter referred to as microcell superframe) includes L microcell frames. M may be 14, N may be 10, and L may be 1024. In other words, each microcell subframe includes 14 symbols, each microcell frame includes 10 microcell subframes, and each microcell superframe includes 1024 microcell frames.

In addition, in order to further improve the efficiency of the data transmission between the micro base station and the mobile terminal as well as the throughput of the micro base station, the frame structure of the microcell may be reset in such a manner that the number of the symbols included in the microcell subframe is greater than the number of the symbols included in the macrocell subframe. At this point, a length of each symbol included in the microcell subframe is less than that of each symbol included in the macrocell subframe. Fig.3 shows the frame structure of the microcell, where each microcell subframe includes K symbols, each microcell frame includes N microcell subframes, and each microcell superframe includes L microcell frames. K may be 280 (i.e., each microcell subframe includes 280 symbols), each microcell frame includes 10 microcell subframes, and each microcell superframe includes 1024 microcell frames.

In this embodiment of the present disclosure, frame synchronization may be maintained between the microcell subframe and the macrocell subframe, so as to switch the data transmission between the macrocell and the microcell rapidly and smoothly. In other words, a length of each microcell subframe (a product of the number of the symbols included in the microcell subframe and a length of each symbol) is equal to a length of each macrocell subframe (a product of the number of the symbols included in the macrocell subframe and a length of each symbol).

In the above-mentioned procedure, the mobile terminal may accesses the cellular communication system in a contention-free access mode, and may determine the symbols to be occupied by the to-be-transmitted data signaling from the symbols included in the microcell subframe, i.e., determine the symbols scheduled by the micro base station and desired for the transmission of the data signaling from the symbols included in the microcell subframe.

In addition, a contention access period and a contention-free access period may be configured for the micro base station by a resource management center at a network side, and then the contention access period, its corresponding contention access mode, the contention-free access period and its corresponding contention-free access mode may be notified by the macro base station to the mobile terminals. Of course, under some special conditions (e.g., when a fault or service saturation occurs for the macro base station), they may also be notified by the micro base station to the mobile terminals.

When the mobile terminal determines the symbols to be occupied by the to-be-transmitted data signaling, it may determine whether it is currently in the contention access period or the content-free access period. When the mobile terminal is currently in the contention access period, the mobile terminal may determine the symbols to be occupied by the to-be-transmitted data signaling from the symbols included in the microcell subframe in the contention access mode. When the mobile terminal is currently in the contention-free access period, the mobile terminal may determine the symbols to be occupied by the to-be-transmitted data signaling from the symbols included in the microcell subframe in the contention-free access mode. The determination of the resources occupied by the data signaling in the contention access mode and in the contention-free access mode is known in the art, and thus will not be particularly defined herein.

In this embodiment of the present disclosure, the contention access period and the content-free access period may be preconfigured in, but not limited to, the following two ways.

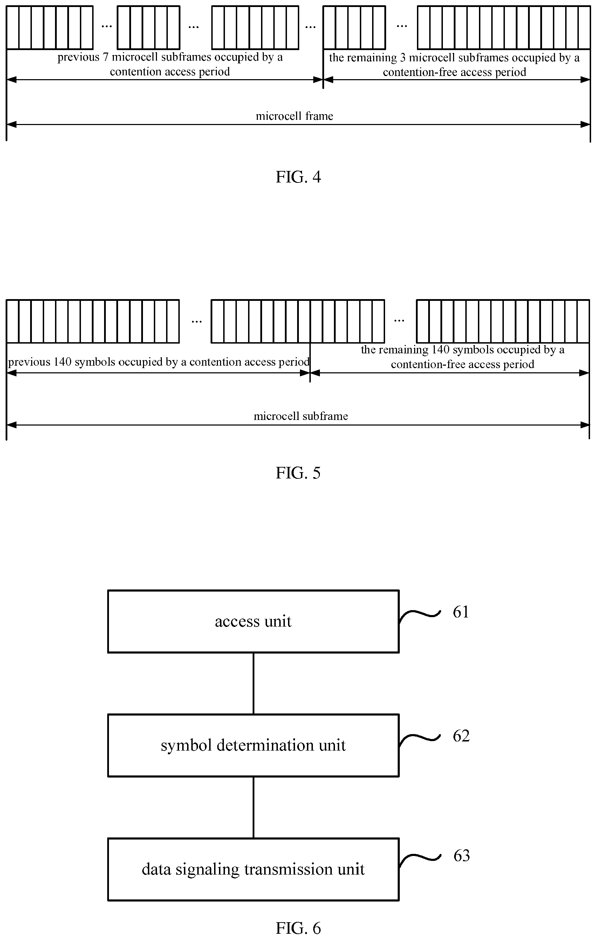

In a first way, as shown in Fig.4, the microcell frame may be divided in such a manner that the contention access period occupies several subframes of the microcell frame while the contention-free access period occupies the other subframes. For example, the previous 7 microcell subframes included in each microcell frame may be occupied by the contention access period, while the remaining 3 microcell subframes may be occupied by the contention-free access period.

In a second way, as shown in Fig.5, the microcell subframe may be divided in such a manner than the contention access period occupies several symbols included in the microcell subframe while the contention-free access period occupies the other symbols. For example, the previous 140 symbols included in each microcell subframe may be occupied by the contention access period, while the remaining 140 symbols may be occupied by the contention-free access period.

### Second Embodiment

On the basis of the heterogeneous network communication method in the first embodiment, the present disclosure further provides in this embodiment a mobile terminal. As shown in Fig.6, the mobile terminal includes an access unit 61 configured to access a cellular communication system via a micro base station, a symbol determination unit 62 configured to, when data signaling is to be transmitted between the mobile terminal and the micro base station, determine symbols to be occupied by the to-be-transmitted data signaling from symbols included in a microcell subframe, and a data signaling transmission unit 63 configured to transmit the data signaling between the mobile terminal and the micro base station on the basis of the determined symbols.

Optionally, the symbol determination unit 62 is configured to, when the mobile terminal is currently in a preconfigured contention access period, determine the symbols to be occupied by the to-be-transmitted data signaling from the symbols included in the microcell subframe in a contention access mode, and when the mobile terminal is currently in a preconfigured contention-free access period, determine the symbols to be occupied by the to-be-transmitted data signaling from the symbols included in the microcell subframe in a contention-free access mode.

Optionally, the mobile terminal further includes a high-layer signaling reception unit configured to high-layer signaling for the micro base station from a macro base station to which the micro base station belongs.

### Third Embodiment

After a mobile terminal accesses a cellular communication system via a micro base station, information is transmitted between the mobile terminal and the micro base station in accordance with a frame structure of a microcell. To be specific, the micro base station may transmit data signaling to the mobile terminal in accordance with the frame structure of the microcell, and receive data signaling transmitted by the mobile terminal in accordance with the frame structure of the microcell. A procedure of transmitting the data signaling from the micro base station to the mobile terminal and a procedure of receiving by the mobile terminal the data signaling from the mobile terminal will be described in this embodiment.

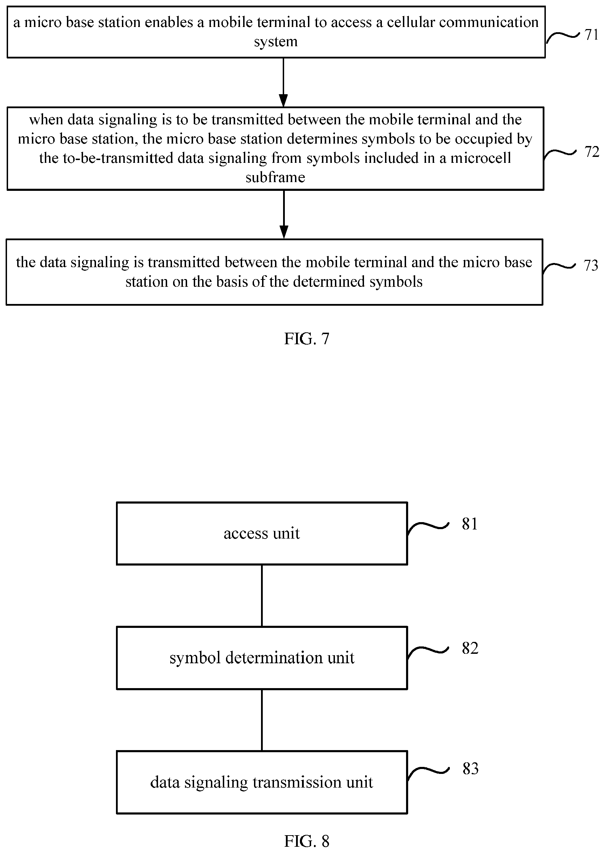

As shown in Fig.7, the present disclosure provides in this embodiment a heterogeneous network communication method at a micro base station side, which includes the following steps.

At step 71, a micro base station enables a mobile terminal to access a cellular communication system.

To be specific, the mobile terminal may initially access the cellular communication system via a macro base station by default, and under some special conditions (e.g., when a fault or service saturation occurs for the macro base station), the mobile terminal may access the cellular communication system via the micro base station.

After the mobile terminal accesses the cellular communication system via the macro base station, information is transmitted between the mobile terminal and the macro base station in accordance with a frame structure of a macrocell. Fig.2 shows the frame structure of the macrocell. Each macrocell subframe includes M symbols, each macrocell frame includes N macrocell subframes, and each macrocell superframe includes L macrocell frames. M may be 14, N may be 10, and L may be 1024.

The information is transmitted between the mobile terminal and the macro base station on the basis of subframes. To be specific, when the information is to be transmitted from the macro base station to the mobile terminal, the macro base station may determine the macrocell subframes to be occupied by the to-be-transmitted information, and then transmit the to-be-transmitted information to the mobile terminal on the basis of the determined macrocell subframes. When the information is to be received by the macro base station from the mobile terminal, the mobile terminal may determine the macrocell subframes to be occupied by the information, and then receive the information from the mobile terminal on the basis of the determined macrocell subframes.

After the mobile terminal accesses the cellular communication system via the macro base station, a switch program may be enabled by the macro base station when the mobile terminal enters a coverage range of a certain micro base station, so as to switch the macro base station to the micro base station and enable the mobile terminal to access the cellular communication system via the micro base station. A procedure for switching the macro base station to the micro base station is known in the art, and thus will not be particularly defined herein.

At step 72, when data signaling is to be transmitted between the mobile terminal and the micro base station, the micro base station determines symbols to be occupied by the to-be-transmitted data signaling from symbols included in a microcell subframe.

In this embodiment of the present disclosure, after the mobile terminal accesses the cellular communication system via the micro base station, a data plane and a control plane of the mobile terminal may be separated from each other. The control plane is mainly controlled by the macro cell and includes access management and mobility management, and the microcell mainly takes charge of the data communication at the data plane. The data signaling is merely transmitted between the mobile terminal and the micro base station, and the high-layer signaling for the micro base station is transmitted by the macro base station to which the micro base station belongs to the mobile terminal. As a result, it is able to reduce a large number of processing resources for the micro base station, ensure the user experience, and facilitate the management and control of the mobile terminal.

At step 73, the data signaling is transmitted between the mobile terminal and the micro base station on the basis of the determined symbols.

In the third embodiment of the present disclosure, the data signaling may be transmitted between the mobile terminal and the micro base station on the basis of symbols. In this way, it is able to prevent the occurrence of such a condition where merely a part of the symbols included in the microcell subframe are occupied by the data signaling, thereby to improve the efficiency of the data transmission between the micro base station and the mobile terminal as well as the throughput of the micro base station, and reduce the data transmission delay for the micro base station.

The transmission of the data signaling between the mobile terminal and the micro base station includes the transmission of the data signal from the micro base station to the mobile terminal and the transmission of the data signal from the mobile terminal to the micro base station. When the data signaling is transmitted from the micro base station to the mobile terminal, the micro base station may determine the symbols to be occupied by the to-be-transmitted data signaling from the symbols included in the microcell subframe, and then transmit the data signaling to the mobile terminal on the basis of the determined symbols. When the data signaling is transmitted from the mobile terminal to the micro base station, the micro base station may determine the symbols to be occupied by the to-be-transmitted data signaling from the symbols included in the microcell subframe, and then receive the data signaling from the mobile terminal on the basis of the determined symbols.

When the micro base station determines the symbols to be occupied by the to-be-transmitted data signaling, the number of the symbols to be occupied may be determined in accordance with a duration desired for transmitting the data signaling between the mobile terminal and the micro base station and a length of each symbol in the frame structure of the microcell. Then, the micro base station may determine the symbols desired for the transmission of the data signaling from the symbols included in the microcell subframe in accordance with the number of the symbols to be occupied.

In addition, in order to further improve the efficiency of the data transmission between the micro base station and the mobile terminal as well as the throughput of the micro base station, the frame structure of the microcell may be reset in such a manner that the number of the symbols included in the microcell subframe is greater than the number of the symbols included in the macrocell subframe. At this point, a length of each symbol included in the microcell subframe is less than that of each symbol included in the macrocell subframe. Fig.3 shows the frame structure of the microcell, where each microcell subframe includes K symbols, each microcell frame includes N microcell subframes, and each microcell superframe includes L microcell frames. K may be 280.

In this embodiment of the present disclosure, frame synchronization may be maintained between the microcell subframe and the macrocell subframe, so as to switch the data transmission between the macrocell and the microcell rapidly and smoothly. In other words, a length of each microcell subframe (a product of the number of the symbols included in the microcell subframe and a length of each symbol) is equal to a length of each macrocell subframe (a product of the number of the symbols included in the macrocell subframe and a length of each symbol).

In addition, a contention access period and a contention-free access period may be configured for the micro base station by a resource management center at a network side, and then the contention access period, its corresponding contention access mode, the contention-free access period and its corresponding contention-free access mode may be notified by the macro base station to the mobile terminals. Of course, under some special conditions (e.g., when a fault or service saturation occurs for the macro base station), they may also be notified by the micro base station to the mobile terminals.

When the micro base station determines the symbols to be occupied by the to-be-transmitted data signaling, the micro base station may determine whether it is currently in the contention access period or the content-free access period. When the micro base station is currently in the contention access period, the micro base station may determine the symbols to be occupied by the to-be-transmitted data signaling from the symbols included in the microcell subframe in the contention access mode. When the micro base station is currently in the contention-free access period, the micro base station may determine the symbols to be occupied by the to-be-transmitted data signaling from the symbols included in the microcell subframe in the contention-free access mode.

The configuration ways for the contention access period and the contention-free access period are identical to those mentioned in the first embodiment, and thus will not be particularly defined herein.

### Fourth Embodiment

On the basis of the heterogeneous network communication method in the third embodiment, the present disclosure provides in this embodiment a micro base station. As shown in Fig.8, the micro base station includes an access unit 81 configured to enable a mobile terminal to access a cellular communication system, a symbol determination unit 82 configured to, when data signaling is to be transmitted between the micro base station and the mobile terminal, determine symbols to be occupied by the to-be-transmitted data signaling from symbols included in a microcell subframe, and a data signaling transmission unit 83 configured to transmit the data signaling between the micro base station and the mobile terminal on the basis of the symbols determined by the symbol determination unit 82.

Optionally, the symbol determination unit 82 is configured to, when the micro base station is currently in a preconfigured contention access period, determine the symbols to be occupied by the to-be-transmitted data signaling from the symbols included in the microcell subframe in a contention access mode; and when the micro base station is currently in a preconfigured contention-free access period, determine the symbols to be occupied by the to-be-transmitted data signaling from the symbols included in the microcell subframe in a contention-free access mode.

The above are merely the preferred embodiments of the present disclosure.

## Claims

1. A communication method by a mobile terminal in a heterogeneous network comprising a micro base station and a macrocell base station to which the micro base station belongs, said method comprising steps of:
accessing (11), a cellular communication system via the micro base station; and said method being **characterized in that**:
when data signaling is to be transmitted from the mobile terminal to the micro base station, determining (12) symbols to be occupied by the to-be-transmitted data signaling, wherein each of said symbols has a length which is equal to the length of a microcell subframe divided into a number K of symbols comprised in a microcell subframe; and transmitting (13) the data signaling to the micro base station on the basis of the determined symbols rather than on the basis of the microcell subframe; and/or when data signaling is to be received by the mobile terminal from the micro base station, determining (12) symbols to be occupied by the to-be-received data signaling, wherein each of said symbols has a length which is equal to the length of a microcell subframe divided into a number K of symbols comprised in a microcell subframe, and receiving (13) the data signaling from the micro base station on the basis of the determined symbols rather than on the basis of the microcell subframe;
wherein the data signaling includes data, information about a modulation mode of the data, information about a length of the data and transmission resource indication information about the data;
wherein the length of the microcell subframe is equal to the length of a macrocell subframe and
wherein the number of symbols comprised in the microcell subframe is greater than the number of symbols comprised in the macrocell subframe, wherein the macrocell subframe comprises M symbols, a macrocell frame comprises N macrocell subframes, a macrocell superframe comprises L macrocell frames, and wherein the microcell subframe comprises K symbols, a microcell frame comprises N microcell subframes, a microcell superframe comprises L microcell frames, such that K is greater than M.

2. The communication method according to claim 1, wherein frame synchronization is maintained between the microcell subframe and the macrocell subframe.

3. The communication method according to claim 1 or 2, wherein the step of determining the symbols to be occupied by the to-be-transmitted data signaling comprises:
when the mobile terminal is currently in a preconfigured contention access period, determining the symbols to be occupied by the to-be-transmitted data signaling in a contention access mode; and
when the mobile terminal is currently in a preconfigured contention-free access period, determining the symbols to be occupied by the to-be-transmitted data signaling in a contention-free access mode.

4. The communication method according to claim 3, wherein several subframes of the microcell frame or several symbols of the microcell subframe are occupied by each contention access period.

5. The communication method according to any one of claims 1-4, further comprising:
receiving high-layer signaling for the micro base station from the macrocell base station to which the micro base station belongs.

6. A mobile terminal adapted to operate in a heterogeneous network comprising a micro base station and a macrocell base station to which the micro base station belongs, said mobile terminal comprising:
an access unit (61) configured to access a cellular communication system via the micro base station: said mobile terminal being **characterized by**:
a symbol determination unit (62) configured to, when data signaling is to be transmitted from the mobile terminal to the micro base station, determine symbols to be occupied by the to-be-transmitted data signaling, wherein each of said symbols has a length which is equal to the length of a microcell subframe divided into a number K of symbols comprised in a microcell subframe, and/or when data signaling is to be received by the mobile terminal from the micro base station, determine symbols to be occupied by the to-be-received data signaling, wherein each of said symbols has a length which is equal to the length of a microcell subframe divided into a number K of symbols comprised in a microcell subframe; and
a data signaling transmission unit (63) configured to transmit the data signaling from the mobile terminal to the micro base station on the basis of the determined symbols rather than on the basis of the microcell subframe, and/or receive the data signaling by the mobile terminal from the micro base station on the basis of the determined symbols rather than on the basis of the microcell subframe; wherein the data signaling includes data, information about a modulation mode of the data, information about a length of the data and transmission resource indication information about the data; wherein the length of the microcell subframe is equal to the length of a macrocell subframe and
wherein the number of symbols comprised in the microcell subframe is greater than the number of symbols comprised in the macrocell subframe, wherein the macrocell subframe comprises M symbols, a macrocell frame comprises N macrocell subframes, a macrocell superframe comprises L macrocell frames, and wherein the microcell subframe comprises K symbols, a microcell frame comprises N microcell subframes, a microcell superframe comprises L microcell frames, such that K is greater than M.

7. The mobile terminal according to claim 6, wherein the symbol determination unit (61) is configured to, when the mobile terminal is currently in a preconfigured contention access period, determine the symbols to be occupied by the to-be-transmitted data signaling in a contention access mode, and when the mobile terminal is currently in a preconfigured contention-free access period, determine the symbols to be occupied by the to-be-transmitted data signaling in a contention-free access mode.

8. The mobile terminal according to claim 6 or 7, further comprising:
a high-layer signaling reception unit configured to receive high-layer signaling for the micro base station from the macrocell base station to which the micro base station belongs.

9. A communication method by a micro base station in a heterogeneous network comprising the micro base station and a macrocell base station to which the micro base station belongs, said method comprising:
enabling (71) a mobile terminal to access a cellular communication system; and said method being **characterized in that**:
when data signaling is to be transmitted from the micro base station to the mobile terminal, determining (72) symbols to be occupied by the to-be-transmitted data signaling, wherein each of said symbols has a length which is equal to the length of a microcell subframe divided into a number K of symbols comprised in a microcell subframe, and transmitting (73) the data signaling to the mobile terminal on the basis of the determined symbols rather than on the basis of the microcell subframe;
and/or when data signaling is to be received by the micro base station from the mobile terminal, determining (72) symbols to be occupied by the to-be-received data signaling, wherein each of said symbols has a length which is equal to the length of a microcell subframe divided into a number K of symbols comprised in a microcell subframe, and receiving (73) the data signaling from the mobile terminal on the basis of the determined symbols rather than on the basis of the microcell subframe; wherein the data signaling includes data, information about a modulation mode of the data, information about a length of the data and transmission resource indication information about the data; wherein the length of the microcell subframe is equal to the length of a macrocell subframe and
wherein the number of symbols comprised in the microcell subframe is greater than the number of symbols comprised in the macrocell subframe; wherein the macrocell subframe comprises M symbols, a macrocell frame comprises N macrocell subframes, a macrocell superframe comprises L macrocell frames; and wherein the microcell subframe comprises K symbols, a microcell frame comprises N microcell subframes, a microcell superframe comprises L microcell frames, such that K is greater than M.

10. The communication method according to claim 9,
wherein frame synchronization is maintained between the microcell subframe and the macrocell subframe.

11. The communication method according to claim 9 or 10, wherein the step of determining the symbols to be occupied by the to-be-transmitted data signaling comprises:
when the micro base station is currently in a preconfigured contention access period, determining the symbols to be occupied by the to-be-transmitted data signaling in a contention access mode; and
when the micro base station is currently in a preconfigured contention-free access period, determining the symbols to be occupied by the to-be-transmitted data signaling in a contention-free access mode.

12. The communication method according to claim 11, wherein several subframes of the microcell frame or several symbols of the microcell subframe are occupied by each contention access period.

13. A micro base station adapted to operate in a heterogeneous network comprising the micro base station and a macrocell base station to which the micro base station belongs, said micro base station comprising:
an access unit (81) configured to enable a mobile terminal to access a cellular communication system; said micro base station being **characterized by**:
a symbol determination unit (82) configured to, when data signaling is to be transmitted from the micro base stationto the mobile terminal, determine symbols to be occupied by the to-be-transmitted data signaling, wherein each of said symbols has a length which is equal to the length of a microcell subframe divided into a number K of symbols comprised in a microcell subframe, and/or when data signaling is to be received by the micro base station from the mobile terminal, determine symbols to be occupied by the to-be-received data signaling, wherein each of said symbols has a length which is equal to the length of a microcell subframe divided into a number K of symbols comprised in a microcell subframe; and
a data signaling transmission unit (83) configured to transmit the data signaling to the mobile terminal on the basis of the determined symbols rather than on the basis of the microcell subframe, and/or receive the data signaling from the mobile terminal on the basis of the determined symbols rather than on the basis of the microcell subframe; wherein the data signaling includes data, information about a modulation mode of the data, information about a length of the data and transmission resource indication information about the data; wherein the length of the microcell subframe is equal to the length of a macrocell subframe and
wherein the number of symbols comprised in the microcell subframe is greater than the number of symbols comprised in the macrocell subframe; wherein the macrocell subframe comprises M symbols, a macrocell frame comprises N macrocell subframes, a macrocell superframe comprises L macrocell frames; and wherein the microcell subframe comprises K symbols, a microcell frame comprises N microcell subframes, a microcell superframe comprises L microcell frames, such that K is greater than M.

14. The micro base station according to claim 13, wherein the symbol determination unit (82) is configured to, when the micro base station is currently in a preconfigured contention access period, determine the symbols to be occupied by the to-be-transmitted data signaling in a contention access mode; and when the micro base station is currently in a preconfigured contention-free access period, determine the symbols to be occupied by the to-be-transmitted data signaling in a contention-free access mode.

## Patentansprüche

1. Kommunikationsverfahren durch ein mobiles Endgerät in einem heterogenen Netzwerk, das eine Mikro-Basisstation und eine Makrozellen-Basisstation umfasst, zu der die Mikro-Basisstation gehört, wobei das Verfahren die folgenden Schritte umfasst:
Zugreifen (11) auf ein zellulares Kommunikationssystem über die Mikro-Basisstation; und wobei das Verfahren durch Folgendes gekennzeichnet ist:
wenn eine Datensignalisierung von dem mobilen Endgerät an die Mikro-Basisstation übertragen werden soll, Bestimmen (12) von Symbolen, die von der zu übertragenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind; und
Übertragen (13) der Datensignalisierung an die Mikro-Basisstation auf der Grundlage der bestimmten Symbole anstatt auf der Grundlage des Mikrozellen-Unterrahmens; und/oder
wenn eine Datensignalisierung durch das mobile Endgerät von der Mikro-Basisstation empfangen werden soll, Bestimmen (12) von Symbolen, die von der zu empfangenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind, und
Empfangen (13) der Datensignalisierung von der Mikro-Basisstation auf der Grundlage der bestimmten Symbole anstatt auf der Grundlage des Mikrozellen-Unterrahmens;
wobei die Datensignalisierung Daten, Informationen über einen Modulationsmodus der Daten, Informationen über eine Länge der Daten und Übertragungsressourcenanzeigeinformationen über die Daten enthält;
wobei die Länge des Mikrozellen-Unterrahmens gleich der Länge eines Makrozellen-Unterrahmens ist und wobei die Anzahl der in dem Mikrozellen-Unterrahmen enthaltenen Symbole größer als die Anzahl der in dem Makrozellen-Unterrahmen enthaltenen Symbole ist, wobei der Makrozellen-Unterrahmen M Symbole umfasst, ein Makrozellen-Rahmen N Makrozellen-Unterrahmen umfasst, ein Makrozellen-Überrahmen L Makrozellen-Rahmen umfasst und wobei der Mikrozellen-Unterrahmen K Symbole umfasst, ein Mikrozellen-Rahmen N Mikrozellen-Unterrahmen umfasst, ein Mikrozellen-Überrahmen L Mikrozellen-Rahmen umfasst, sodass K größer als M ist.

2. Kommunikationsverfahren nach Anspruch 1, wobei eine Rahmensynchronisation zwischen dem Mikrozellen-Unterrahmen und dem Makrozellen-Unterrahmen aufrechterhalten wird.

3. Kommunikationsverfahren nach Anspruch 1 oder 2, wobei der Schritt des Bestimmens der Symbole, die von der zu übertragenden Datensignalisierung belegt werden sollen, umfasst:
wenn sich das mobile Endgerät derzeit in einem vorkonfigurierten Konfliktzugriffszeitraum befindet, Bestimmen der Symbole, die von der zu übertragenden Datensignalisierung in einem Konfliktzugriffsmodus belegt werden sollen; und
wenn sich das mobile Endgerät derzeit in einem vorkonfigurierten konfliktfreien Zugriffszeitraum befindet, Bestimmen der Symbole, die von der zu übertragenden Datensignalisierung in einem konfliktfreien Zugriffsmodus belegt werden sollen.

4. Kommunikationsverfahren nach Anspruch 3, wobei mehrere Unterrahmen des Mikrozellen-Rahmens oder mehrere Symbole des Mikrozellen-Unterrahmens durch jeden Konfliktzugriffszeitraum belegt sind.

5. Kommunikationsverfahren nach einem der Ansprüche 1 bis 4, ferner umfassend: Empfangen einer Signalisierung der höheren Schicht für die Mikro-Basisstation von der Makrozellen-Basisstation, zu der die Mikro-Basisstation gehört.

6. Mobiles Endgerät, das dazu vorgesehen ist, um in einem heterogenen Netzwerk betrieben zu werden, das eine Mikro-Basisstation und eine Makrozellen-Basisstation umfasst, zu der die Mikro-Basisstation gehört, das mobile Endgerät umfassend:
eine Zugriffseinheit (61), die konfiguriert ist, um über die Mikro-Basisstation auf ein zellulares Kommunikationssystem zuzugreifen, wobei das mobile Endgerät **gekennzeichnet ist durch**:
eine Symbolbestimmungseinheit (62), die konfiguriert ist, um, wenn eine Datensignalisierung von dem mobilen Endgerät an die Mikro-Basisstation übertragen werden soll, Symbole zu bestimmen, die von der zu übertragenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind, und/oder
wenn eine Datensignalisierung **durch** das mobile Endgerät von der Mikro-Basisstation empfangen werden soll, Symbole zu bestimmen, die von der zu empfangenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind; und
eine Datensignalisierungsübertragungseinheit (63), die konfiguriert ist, um die Datensignalisierung von dem mobilen Endgerät an die Mikro-Basisstation auf der Grundlage der bestimmten Symbole anstatt auf der Grundlage des Mikrozellen-Unterrahmens zu übertragen und/oder die Datensignalisierung **durch** das mobile Endgerät von der Mikro-Basisstation auf der Grundlage der bestimmten Symbole anstatt auf der Grundlage des Mikrozellen-Unterrahmens zu empfangen;
wobei die Datensignalisierung Daten, Informationen über einen Modulationsmodus der Daten, Informationen über eine Länge der Daten und Übertragungsressourcenanzeigeinformationen über die Daten enthält; wobei die Länge des Mikrozellen-Unterrahmens gleich der Länge eines Makrozellen-Unterrahmens ist, und
wobei die Anzahl der in dem Mikrozellen-Unterrahmen enthaltenen Symbole größer ist als die Anzahl der in dem Makrozellen-Unterrahmen enthaltenen Symbole ist, wobei der Makrozellen-Unterrahmen M Symbole umfasst, ein Makrozellen-Rahmen N Makrozellen-Unterrahmen umfasst, ein Makrozellen-Überrahmen L Makrozellen-Rahmen umfasst und wobei der Mikrozellen-Unterrahmen K Symbole umfasst, ein Mikrozellen-Rahmen N Mikrozellen-Unterrahmen umfasst, ein Mikrozellen-Überrahmen L Mikrozellen-Rahmen umfasst, sodass K größer als M ist.

7. Mobiles Endgerät nach Anspruch 6, wobei die Symbolbestimmungseinheit (61) konfiguriert ist, um, wenn sich das mobile Endgerät derzeit in einem vorkonfigurierten Konfliktzugriffszeitraum befindet, die Symbole zu bestimmen, die von der zu übertragenden Datensignalisierung in einem Konfliktzugriffsmodus belegt werden sollen, und wenn sich das mobile Endgerät derzeit in einem vorkonfigurierten konfliktfreien Zugriffszeitraum befindet, die Symbole zu bestimmen, die von der zu übertragenden Datensignalisierung in einem konfliktfreien Zugriffsmodus belegt werden sollen.

8. Mobiles Endgerät nach Anspruch 6 oder 7, ferner umfassend:
eine Empfangseinheit für die Signalisierung der höheren Schicht, die konfiguriert ist, um die Signalisierung der höheren Schicht für die Mikro-Basisstation von der Makrozellen-Basisstation zu empfangen, zu der die Mikro-Basisstation gehört.

9. Kommunikationsverfahren durch eine Mikro-Basisstation in einem heterogenen Netzwerk, das die Mikro-Basisstation und eine Makrozellen-Basisstation umfasst, zu der die Mikro-Basisstation gehört, das Verfahren umfassend:
Befähigen (71) eines mobilen Endgeräts, auf ein zellulares Kommunikationssystem zuzugreifen; und wobei das Verfahren durch Folgendes gekennzeichnet ist:
wenn eine Datensignalisierung von der Mikro-Basisstation an das mobile Endgerät übertragen werden soll, Bestimmen (72) von Symbolen, die von der zu übertragenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind, und Übertragen (73) der Datensignalisierung an das mobile Endgerät auf der Grundlage der bestimmten Symbole anstatt auf der Grundlage des Mikrozellen-Unterrahmens; und/oder
wenn eine Datensignalisierung durch die Mikro-Basisstation von dem mobilen Endgerät empfangen werden soll, Bestimmen (72) von Symbolen, die von der zu empfangenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind, und Empfangen (73) der Datensignalisierung von dem mobilen Endgerät auf der Grundlage der bestimmten Symbole anstatt auf der Grundlage des Mikrozellen-Unterrahmens; wobei die Datensignalisierung Daten, Informationen über einen Modulationsmodus der Daten, Informationen über eine Länge der Daten und Übertragungsressourcenanzeigeinformationen über die Daten enthält; wobei die Länge des Mikrozellen-Unterrahmens gleich der Länge eines Makrozellen-Unterrahmens ist und wobei die Anzahl von Symbolen, die in dem Mikrozellen-Unterrahmen enthalten sind, größer ist als die Anzahl von Symbolen, die in dem Makrozellen-Unterrahmen enthalten sind; wobei der Makrozellen-Unterrahmen M Symbole umfasst, ein Makrozellen-Rahmen N Makrozellen-Unterrahmen umfasst, ein Makrozellen-Überrahmen L Makrozellen-Rahmen umfasst; und wobei der Mikrozellen-Unterrahmen K Symbole umfasst, ein Mikrozellen-Rahmen N Mikrozellen-Unterrahmen umfasst, ein Mikrozellen-Überrahmen L Mikrozellen-Rahmen umfasst, sodass K größer als M ist.

10. Kommunikationsverfahren nach Anspruch 9,
wobei eine Rahmensynchronisation zwischen dem Mikrozellen-Unterrahmen und dem Makrozellen-Unterrahmen aufrechterhalten wird.

11. Kommunikationsverfahren nach Anspruch 9 oder 10, wobei der Schritt des Bestimmens der Symbole, die von der zu übertragenden Datensignalisierung belegt werden sollen, umfasst:
wenn sich die Mikro-Basisstation derzeit in einem vorkonfigurierten Konfliktzugriffszeitraum befindet, Bestimmen der Symbole, die von der zu übertragenden Datensignalisierung in einem Konfliktzugriffsmodus belegt werden sollen; und
wenn sich die Mikro-Basisstation derzeit in einem vorkonfigurierten konfliktfreien Zugriffszeitraum befindet, Bestimmen der Symbole, die von der zu übertragenden Datensignalisierung in einem konfliktfreien Zugriffsmodus belegt werden sollen.

12. Kommunikationsverfahren nach Anspruch 11, wobei mehrere Unterrahmen des Mikrozellen-Rahmens oder mehrere Symbole des Mikrozellen-Unterrahmens durch jeden Konfliktzugriffszeitraum belegt sind.

13. Mikro-Basisstation, die dazu vorgesehen ist, um in einem heterogenen Netzwerk betrieben zu werden, das die Mikro-Basisstation und eine Makrozellen-Basisstation umfasst, zu der die Mikro-Basisstation gehört, die Mikro-Basisstation umfassend:
eine Zugriffseinheit (81), die konfiguriert ist, um ein mobiles Endgerät zu befähigen, auf ein zellulares Kommunikationssystem zuzugreifen;
wobei die Mikro-Basisstation **gekennzeichnet ist durch**:
eine Symbolbestimmungseinheit (82), die konfiguriert ist, um, wenn eine Datensignalisierung von der Mikro-Basisstation an das mobile Endgerät übertragen werden soll, Symbole zu bestimmen, die von der zu übertragenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind, und/oder wenn eine Datensignalisierung **durch** die Mikro-Basisstation von dem mobilen Endgerät empfangen werden soll, Symbole zu bestimmen, die von der zu empfangenden Datensignalisierung belegt werden sollen, wobei jedes der Symbole eine Länge aufweist, die gleich der Länge eines Mikrozellen-Unterrahmens ist, der in eine Anzahl K von Symbolen unterteilt ist, die in einem Mikrozellen-Unterrahmen enthalten sind, und
eine Datensignalisierungsübertragungseinheit (83), die konfiguriert ist, um die Datensignalisierung an das mobile Endgerät auf der Grundlage der bestimmten Symbole anstatt auf der Grundlage des Mikrozellen-Unterrahmens zu übertragen und/oder die Datensignalisierung von dem mobilen Endgerät auf der Grundlage der bestimmten Symbole anstatt auf der Grundlage des Mikrozellen-Unterrahmens zu empfangen;
wobei die Datensignalisierung Daten, Informationen über einen Modulationsmodus der Daten, Informationen über eine Länge der Daten und Übertragungsressourcenanzeigeinformationen über die Daten enthält;
wobei die Länge des Mikrozellen-Unterrahmens gleich der Länge eines Makrozellen-Unterrahmens ist und wobei die Anzahl von Symbolen, die in dem Mikrozellen-Unterrahmen enthalten sind, größer ist als die Anzahl von Symbolen, die in dem Makrozellen-Unterrahmen enthalten sind; wobei der Makrozellen-Unterrahmen M Symbole umfasst, ein Makrozellen-Rahmen N Makrozellen-Unterrahmen umfasst, ein Makrozellen-Überrahmen L Makrozellen-Rahmen umfasst; und wobei der Mikrozellen-Unterrahmen K Symbole umfasst, ein Mikrozellen-Rahmen N Mikrozellen-Unterrahmen umfasst, ein Mikrozellen-Überrahmen L Mikrozellen-Rahmen umfasst, sodass K größer als M ist.

14. Mikro-Basisstation nach Anspruch 13, wobei die Symbolbestimmungseinheit (82) konfiguriert ist, um, wenn sich die Mikro-Basisstation derzeit in einem vorkonfigurierten Konfliktzugriffszeitraum befindet, die Symbole zu bestimmen, die von der zu übertragenden Datensignalisierung in einem Konfliktzugriffsmodus belegt werden sollen; und wenn sich die Mikro-Basisstation derzeit in einem vorkonfigurierten konfliktfreien Zugriffszeitraum befindet, die Symbole zu bestimmen, die von der zu übertragenden Datensignalisierung in einem konfliktfreien Zugriffsmodus belegt werden sollen.

## Revendications

1. Procédé de communication par un terminal mobile dans un réseau hétérogène comportant une micro station de base et une station de base macrocellulaire à laquelle la micro station de base appartient, ledit procédé comprenant les étapes suivantes :
accéder (11), à un système de communication cellulaire par le biais de la micro station de base ; et ledit procédé étant **caractérisé en ce que** :
lorsqu'une signalisation de données doit être transmise à partir du terminal mobile à la micro station de base, déterminer (12) des symboles destinés à être occupés par la signalisation de données devant être transmise, chacun desdits symboles ayant une longueur qui est égale à la longueur d'une sous-trame de microcellule divisée en un nombre K de symboles compris dans une sous-trame de microcellule ; et transmettre (13) la signalisation de données à la micro station de base sur la base des symboles déterminés plutôt que sur la base de la sous-trame de microcellule ; et/ou lorsqu'une signalisation de données doit être reçue par le terminal mobile à partir de la micro station de base, déterminer (12) des symboles destinés à être occupés par la signalisation de données devant être reçue, chacun desdits symboles ayant une longueur qui est égale à la longueur d'une sous-trame de microcellule divisée en un nombre K de symboles compris dans une sous-trame de microcellule, et recevoir (13) la signalisation de données à partir de la micro station de base sur la base des symboles déterminés plutôt que sur la base de la sous-trame de microcellule ;
la signalisation de données comportant des données, des informations concernant un mode de modulation des données, des informations concernant une longueur des données et des informations d'indication de ressource de transmission concernant les données ; la longueur de la sous-trame de microcellule étant égale à la longueur d'une sous-trame de macrocellule et
le nombre de symboles compris dans la sous-trame de microcellule étant supérieur au nombre de symboles compris dans la sous-trame de macrocellule, la sous-trame de macrocellule comportant M symboles, une trame de macrocellule comportant N sous-trames de macrocellule, une supertrame de macrocellule comportant L trames de macrocellule, et la sous-trame de microcellule comportant K symboles, une trame de microcellule comportant N sous-trames de microcellule, une supertrame de microcellule comportant L trames de microcellule, de sorte que K est supérieur à M.

2. Procédé de communication selon la revendication 1, dans lequel une synchronisation de trames est maintenue entre la sous-trame de microcellule et la sous-trame de macrocellule.

3. Procédé de communication selon la revendication 1 ou 2, dans lequel l'étape consistant à déterminer les symboles destinés à être occupés par la signalisation de données devant être transmise comprend :
lorsque le terminal mobile est couramment dans une période d'accès avec conflit préconfigurée, déterminer les symboles destinés à être occupés par la signalisation de données devant être transmise dans un mode d'accès avec conflit ; et
lorsque le terminal mobile est couramment dans une période d'accès sans conflit préconfigurée, déterminer les symboles destinés à être occupés par la signalisation de données devant être transmise dans un mode d'accès sans conflit.

4. Procédé de communication selon la revendication 3, dans lequel plusieurs sous-trames de la trame de microcellule ou plusieurs symboles de la sous-trame de microcellule sont occupés par chaque période d'accès avec conflit.

5. Procédé de communication selon l'une quelconque des revendications 1-4, comprenant en outre : recevoir un signalisation de couche supérieure pour la micro station de base à partir de la station de base macrocellulaire à laquelle la micro station de base appartient.

6. Terminal mobile conçu pour opérer dans un réseau hétérogène comportant une micro station de base et une station de base macrocellulaire à laquelle la micro station de base appartient, ledit terminal mobile comprenant :
une unité d'accès (61) configurée pour accéder à un système de communication cellulaire par le biais de la micro station de base ; ledit terminal mobile étant **caractérisé par** :
une unité de détermination de symbole (62) configurée pour, lorsqu'une signalisation de données doit être transmise à partir du terminal mobile à la micro station de base, déterminer des symboles destinés à être occupés par la signalisation de données devant être transmise, chacun desdits symboles ayant une longueur qui est égale à la longueur d'une sous-trame de microcellule divisée en un nombre K de symboles compris dans une sous-trame de microcellule, et/ou lorsqu'une signalisation de données doit être reçue par le terminal mobile à partir de la micro station de base, déterminer des symboles destinés à être occupés par la signalisation de données devant être reçue, chacun desdits symboles ayant une longueur qui est égale à la longueur d'une sous-trame de microcellule divisée en un nombre K de symboles compris dans une sous-trame de microcellule ; et
une unité de transmission de signalisation de données (63) configurée pour transmettre la signalisation de données à partir du terminal mobile à la micro station de base sur la base des symboles déterminés plutôt que sur la base de la sous-trame de microcellule, et/ou recevoir la signalisation de données par le terminal mobile à partir de la micro station de base sur la base des symboles déterminés plutôt que sur la base de la sous-trame de microcellule ; la signalisation de données comportant des données, des informations concernant un mode de modulation des données, des informations concernant une longueur des données et des informations d'indication de ressource de transmission concernant les données ; la longueur de la sous-trame de microcellule étant égale à la longueur d'une sous-trame de macrocellule et
le nombre de symboles compris dans la sous-trame de microcellule étant supérieur au nombre de symboles compris dans la sous-trame de macrocellule, la sous-trame de macrocellule comportant M symboles, une trame de macrocellule comportant N sous-trames de macrocellule, une supertrame de macrocellule comportant L trames de macrocellule, et la sous-trame de microcellule comportant K symboles, une trame de microcellule comportant N sous-trames de microcellule, une supertrame de microcellule comportant L trames de microcellule, de sorte que K est supérieur à M.

7. Terminal mobile selon la revendication 6, dans lequel l'unité de détermination de symbole (61) est configurée pour, lorsque le terminal mobile est couramment dans une période d'accès avec conflit préconfigurée, déterminer les symboles destinés à être occupés par la signalisation de données devant être transmise dans un mode d'accès avec conflit, et lorsque le terminal mobile est couramment dans une période d'accès sans conflit préconfigurée, déterminer les symboles destinés à être occupés par la signalisation de données devant être transmise dans un mode d'accès sans conflit.

8. Terminal mobile selon la revendication 6 ou 7, comprenant en outre :
une unité de réception de signalisation de couche supérieure configurée pour recevoir une signalisation de couche supérieure pour la micro station de base à partir de la station de base macrocellulaire à laquelle la micro station de base appartient.

9. Procédé de communication par une micro station de base dans un réseau hétérogène comportant la micro station de base et une station de base macrocellulaire à laquelle la micro station de base appartient, ledit procédé comprenant les étapes suivantes :
permettre (71) à un terminal mobile d'accéder à un système de communication cellulaire ; et ledit procédé étant **caractérisé en ce que** :
lorsqu'une signalisation de données doit être transmise à partir de la micro station de base au terminal mobile, déterminer (72) des symboles destinés à être occupés par la signalisation de données devant être transmise, chacun desdits symboles ayant une longueur qui est égale à la longueur d'une sous-trame de microcellule divisée en un nombre K de symboles compris dans une sous-trame de microcellule, et transmettre (73) la signalisation de données au terminal mobile sur la base des symboles déterminés plutôt que sur la base de la sous-trame de microcellule ; et/ou lorsqu'une signalisation de données doit être reçue par la micro station de base à partir du terminal mobile, déterminer (72) des symboles destinés à être occupés par la signalisation de données devant être reçue, chacun desdits symboles ayant une longueur qui est égale à la longueur d'une sous-trame de microcellule divisée en un nombre K de symboles compris dans une sous-trame de microcellule, et recevoir (73) la signalisation de données à partir du terminal mobile sur la base des symboles déterminés plutôt que sur la base de la sous-trame de microcellule ; la signalisation de données comportant des données, des informations concernant un mode de modulation des données, des informations concernant une longueur des données et des informations d'indication de ressource de transmission concernant les données ; la longueur de la sous-trame de microcellule étant égale à la longueur d'une sous-trame de macrocellule et
le nombre de symboles compris dans la sous-trame de microcellule étant supérieur au nombre de symboles compris dans la sous-trame de macrocellule ; la sous-trame de macrocellule comportant M symboles, une trame de macrocellule comportant N sous-trames de macrocellule, une supertrame de macrocellule comportant L trames de macrocellule ; et la sous-trame de microcellule comportant K symboles, une trame de microcellule comportant N sous-trames de microcellule, une supertrame de microcellule comportant L trames de microcellule, de sorte que K est supérieur à M.

10. Procédé de communication selon la revendication 9, dans lequel une synchronisation de trames est maintenue entre la sous-trame de microcellule et la sous-trame de macrocellule.

11. Procédé de communication selon la revendication 9 ou 10, dans lequel l'étape consistant à déterminer les symboles destinés à être occupés par la signalisation de données devant être transmise comprend :
lorsque la micro station de base est couramment dans une période d'accès avec conflit préconfigurée, déterminer les symboles destinés à être occupés par la signalisation de données devant être transmise dans un mode d'accès avec conflit ; et
lorsque la micro station de base est couramment dans une période d'accès sans conflit préconfigurée, déterminer les symboles destinés à être occupés par la signalisation de données devant être transmise dans un mode d'accès sans conflit.

12. Procédé de communication selon la revendication 11, dans lequel plusieurs sous-trames de la trame de microcellule ou plusieurs symboles de la sous-trame de microcellule sont occupés par chaque période d'accès avec conflit.

13. Micro station de base conçue pour opérer dans un réseau hétérogène comportant la micro station de base et une station de base macrocellulaire à laquelle la micro station de base appartient, ladite micro station de base comprenant :
une unité d'accès (81) configurée pour permettre à un terminal mobile d'accéder à un système de communication cellulaire ; ladite micro station de base étant **caractérisée par** :
une unité de détermination de symbole (82) configurée pour, lorsqu'une signalisation de données doit être transmise à partir de la micro station de base au terminal mobile, déterminer des symboles destinés à être occupés par la signalisation de données devant être transmise, chacun desdits symboles ayant une longueur qui est égale à la longueur d'une sous-trame de microcellule divisée en un nombre K de symboles compris dans une sous-trame de microcellule, et/ou lorsqu'une signalisation de données doit être reçue par la micro station de base à partir du terminal mobile, déterminer des symboles destinés à être occupés par la signalisation de données devant être reçue, chacun desdits symboles ayant une longueur qui est égale à la longueur d'une sous-trame de microcellule divisée en un nombre K de symboles compris dans une sous-trame de microcellule ; et
une unité de transmission de signalisation de données (83) configurée pour transmettre la signalisation de données au terminal mobile sur la base des symboles déterminés plutôt que sur la base de la sous-trame de microcellule, et/ou recevoir la signalisation de données à partir du terminal mobile sur la base des symboles déterminés plutôt que sur la base de la sous-trame de microcellule ; la signalisation de données comportant des données, des informations concernant un mode de modulation des données, des informations concernant une longueur des données et des informations d'indication de ressource de transmission concernant les données ; la longueur de la sous-trame de microcellule étant égale à la longueur d'une sous-trame de macrocellule et
le nombre de symboles compris dans la sous-trame de microcellule étant supérieur au nombre de symboles compris dans la sous-trame de macrocellule ; la sous-trame de macrocellule comportant M symboles, une trame de macrocellule comportant N sous-trames de macrocellule, une supertrame de macrocellule comportant L trames de macrocellule ; et la sous-trame de microcellule comportant K symboles, une trame de microcellule comportant N sous-trames de microcellule, une supertrame de microcellule comportant L trames de microcellule, de sorte que K est supérieur à M.

14. Micro station de base selon la revendication 13, dans laquelle l'unité de détermination de symbole (82) est configurée pour, lorsque la micro station de base est couramment dans une période d'accès avec conflit préconfigurée, déterminer les symboles destinés à être occupés par la signalisation de données devant être transmise dans un mode d'accès avec conflit ; et lorsque la micro station de base est couramment dans une période d'accès sans conflit préconfigurée, déterminer les symboles destinés à être occupés par la signalisation de données devant être transmise dans un mode d'accès sans conflit.
